# EUROPEAN PATENT APPLICATION

(11) **EP 4 718 123 A1**
(43) Date of publication of application: **01.04.2026**
(21) Application number: 25177221.6
(22) Date of filing: 19.05.2025
(51) Int. Cl.: G01T 7/00

(54) **RADIATION DETECTOR INCLUDING SUPPORT**

(30) Priority: 26.09.2024 KR 20240130845; 22.04.2025 KR 20250052643; 07.05.2025 KR 20250059293
(71) Applicant: DRTECH CORP, Seongnam-Si, Gyeonggi-do 13216 (KR)
(72) Inventor: SHIN, Choul Woo, 13476 Seongnam-si, Gyeonggi-do (KR); KIM, Yeon Koo, 15853 Gunpo-si, Gyeonggi-do (KR); KIM, Young Kwang, 16457 Suwon-si, Gyeonggi-do (KR)
(74) Representative: Jung, Minkyu

(57) **Abstract**

The present disclosure relates to a radiation detector that detects radiation, the radiation detector including a housing, a detection panel that is included inside the housing and detects radiation, a middle plate that is included inside the housing, is in contact with the detection panel, and supports the detection panel, and a supporting member coupled to the middle plate and supporting the middle plate.

## Description

### CROSS-REFERENCE TO RELATED APPLICATION

This application claims priority to and the benefit of Korean Patent Applications No. 2024-0130845 filed on September 26, 2024, No. 2025-0052643 filed on April 22, 2025, and No. 2025-0059293 filed on May 7, 2025, the disclosure of which is incorporated herein by reference in its entirety.

### BACKGROUND

### 1. Field of the Invention

The present invention relates to a radiation detector including a support. The radiation detector of the present invention has excellent rigidity, and thus even when a radiation image of an object that is heavy and placed on the radiation detector is captured, the radiation detector hardly deforms. Accordingly, the radiation detector has high durability and can acquire a high-quality image.

### 2. Discussion of Related Art

A radiation imaging system is a system for acquiring an image of the inside of a target object and includes a radiation source and a radiation detector. The radiation source irradiates a target object, such as a human body or an object, with radiation, and the radiation detector receives radiation transmitted through the target object and converts the radiation into an electrical signal to generate a radiation image. The radiation imaging system is a system that utilizes the property of X-rays being absorbed or transmitted depending on the characteristics of a material through which the X-rays pass when the target object is irradiated with radiation.

The radiation detector is manufactured with a thickness of 15 mm or less, and thus a panel may be damaged due to an external impact or deformation. Therefore, it is necessary to protect the panel by reinforcing rigidity of a device and improving the durability of the radiation detector to alleviate the impact caused by external force.

### SUMMARY OF THE INVENTION

The present invention is directed to a bendable radiation detector that provides improved radiation images. The radiation detector may provide improved radiation images while preventing external substances from penetrating into the interior of the radiation detector.

However, the technical problems of the present invention are not limited to the technical problems described above, and other technical problems may exist.

According to an aspect of the present invention, there is provided a radiation detector that detects radiation, which includes a housing, a detection panel that is included inside the housing and detects radiation, a middle plate that is included inside the housing, is in contact with the detection panel, and supports the detection panel, and a supporting member coupled to the middle plate and supporting the middle plate.

The supporting member of the radiation detector may be coupled to a region for the supporting member included in at least a portion of a region of the middle plate.

A cross section of the supporting member of the radiation detector may have a portion of a trapezoidal shape or a portion of an inverted trapezoidal shape.

A cross section of the supporting member of the radiation detector may have one of a portion of a polygonal shape, a portion of an elliptical shape, and a portion of a circular shape.

The radiation detector may further include a filler having elasticity in a recess formed by the supporting member.

A material of the supporting member of the radiation detector may include at least one of a metal, a plastic, carbon, and a composite material.

The supporting member of the radiation detector may be coupled to the middle plate by an adhesive layer formed on one end surface of the middle plate.

The supporting member of the radiation detector may be coupled to the middle plate by at least one fastening screw.

The supporting member of the radiation detector may include a plurality of supporting members.

At least a portion of the supporting member of the radiation detector may include a first coupling surface coupled to a rear surface of the housing and parallel to the rear surface, a first inclined surface coupled to the first coupling surface and having a predetermined inclination angle with respect to the rear surface, a second coupling surface coupled to the first inclined surface, coupled to the middle plate, and parallel to the middle plate, a second inclined surface that is coupled to the second coupling surface, has a predetermined inclination angle with respect to the rear surface, and is not parallel to the first inclined surface, and a third coupling surface coupled to the second inclined surface, coupled to the rear surface of the housing, and parallel to the rear surface.

The radiation detector may further include a filler in a first space formed by the rear surface, the first inclined surface, the second coupling surface, and the second inclined surface.

The radiation detector may further include a filler in at least one of a second space and a third space, and the second space is formed by the middle plate, the first coupling surface, the rear surface, and the first inclined surface, and the third space is formed by the middle plate, the second inclined surface, the rear surface, and the third coupling surface.

At least a portion of the supporting member of the radiation detector may include a fourth coupling surface coupled to the middle plate and parallel to the middle plate, a third inclined surface coupled to the fourth coupling surface and having a predetermined inclination angle with respect to the middle plate, a fifth coupling surface coupled to the third inclination surface, coupled to the rear surface of the housing, and parallel to the rear surface, a fourth inclined surface that is coupled to the fifth coupling surface, has a predetermined inclination angle with respect to the middle plate, and is not parallel to the third inclined surface, and a sixth coupling surface coupled to the fourth inclination angle, coupled to the middle plate, and parallel to the middle plate.

The radiation detector may further include a filler in a fourth space formed by the middle plate, the third inclined surface, the fifth coupling surface, and the fourth inclined surface.

The radiation detector may further include a filler in at least one of a fifth space and a sixth space, the fifth space is formed by the middle plate, the fourth coupling surface, the rear surface, and the third inclined surface, and the sixth space is formed by the middle plate, the fourth inclined surface, the rear surface, and the sixth coupling surface.

An elastic layer may be interposed between the detection panel and a front surface of the housing of the radiation detector.

The supporting member of the radiation detector may be coupled to a rear surface of the housing by one or more of at least one fastening screw and an adhesive layer.

The radiation detector may further include a battery in a region where the supporting member is not formed within a region of the middle plate.

In addition, a program for implementing an operating method of a radiation detector of the present disclosure may be recorded on a computer-readable recording medium.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a diagram showing a radiation detector according to an embodiment of the present disclosure;
FIG. 2 shows a part of a cross section of a radiation detector according to an embodiment of the present disclosure;
FIG. 3 is a diagram for describing a middle plate according to an embodiment of the present disclosure;
FIG. 4 is a diagram for describing a disposition of a supporting member according to an embodiment of the present disclosure;
FIG. 5 is a diagram of a middle plate and a supporting member viewed from a rear side according to an embodiment of the present disclosure;
FIG. 6 is a diagram for describing a supporting member according to an embodiment of the present disclosure;
FIG. 7 is a diagram for describing a supporting member according to an embodiment of the present disclosure;
FIG. 8 shows a cross section of a detector according to an embodiment of the present disclosure;
FIG. 9 shows a cross section of a detector according to an embodiment of the present disclosure;
FIG. 10 may be a diagram for describing components included in a detector according to an embodiment of the present disclosure;
FIG. 11 is a diagram for describing a radiation detection panel according to an embodiment of the present disclosure;
FIG. 12 is a diagram for describing the radiation detection panel according to the present disclosure in more detail; and
FIG. 13 is a diagram for describing a scintillator according to an embodiment of the present disclosure.

### DETAILED DESCRIPTION OF EXEMPLARY EMBODIMENTS

The advantages and features of the disclosed embodiments, and the methods for achieving them will become clear with reference to the embodiments described below together with the accompanying drawings. However, the present disclosure is not limited to the embodiments disclosed below and may be implemented in various different forms, and the present embodiments are merely provided to make the present disclosure complete and to fully inform those skilled in the art to which the present disclosure belongs of the scope of the invention.

Terms used in this specification will be briefly explained, and the disclosed embodiments will be described in detail.

The terms used in this specification have been selected from currently widely used general terms as much as possible in consideration of the functions in the present disclosure, but these terms may vary depending on the intention of a technician engaged in the relevant field, precedents, the emergence of new technology, etc. In addition, in certain cases, there are terms arbitrarily selected by the applicant, and in this case, the meaning will be described in detail in the relevant part of the description of the invention. Therefore, the terms used in the present disclosure should be defined based on the meanings of the terms and the overall content of the present disclosure, rather than simply the names of the terms.

In this specification, singular expressions include plural expressions unless they are explicitly specified as singular in the context. In addition, plural expressions include singular expressions unless they are explicitly specified as plural in the context.

When a part "includes" a certain component throughout the specification, unless specifically stated to the contrary, this does not exclude other components but other components may be further included.

In addition, the term "unit" as used in the specification means a software or hardware component, and a "unit" performs a certain function. However, a "unit" is not limited to software or hardware. A "unit" may be configured to reside on an addressable storage medium and may be configured to execute one or more processors. Accordingly, as an example, a "unit" includes components such as software components, object-oriented software components, class components, and task components, processes, functions, attributes, procedures, subroutines, segments of program code, drivers, firmware, microcode, circuitry, data, databases, data structures, tables, arrays, and variables. The functionality provided within the components and "units" may be combined into a smaller number of components and units" or further separated into additional components and "units."

According to an embodiment of the present disclosure, a "unit" may be implemented with a processor and a memory. The term "processor" should be broadly construed to include a general purpose processor, a central processing unit (CPU), a microprocessor, a digital signal processor (DSP), a controller, a microcontroller, a state machine, and the like. In some circumstances, "processor" may also refer to an application specific integrated circuit (ASIC), a programmable logic device (PLD), a field programmable gate array (FPGA), and the like. The term "processor" may also refer to a combination of processing devices, such as, for example, a combination of a DSP and a microprocessor, a combination of a plurality of microprocessors, a combination of one or more microprocessors combined with DSP cores, or any other such combination of configurations.

The term "memory" should be broadly construed to include any electronic component capable of storing electronic information. The term "memory" may also refer to various types of processor-readable media, such as a random access memory (RAM), a read-only memory (ROM), a non-volatile random access memory (NVRAM), a programmable read-only memory (PROM), an erasable programmable read-only memory (EPROM), an electrically erasable PROM (EEPROM), a flash memory, a magnetic or optical data storage, a register, and the like. A memory is said to be in electronic communication with a processor when the processor can read information from and/or write information to the memory. A memory integrated in a processor is in electronic communication with the processor.

Embodiments will be described in detail below with reference to the accompanying drawings so that those skilled in the art can easily implement them. In addition, in order to clearly describe the present disclosure, parts that are not related to the description are omitted.

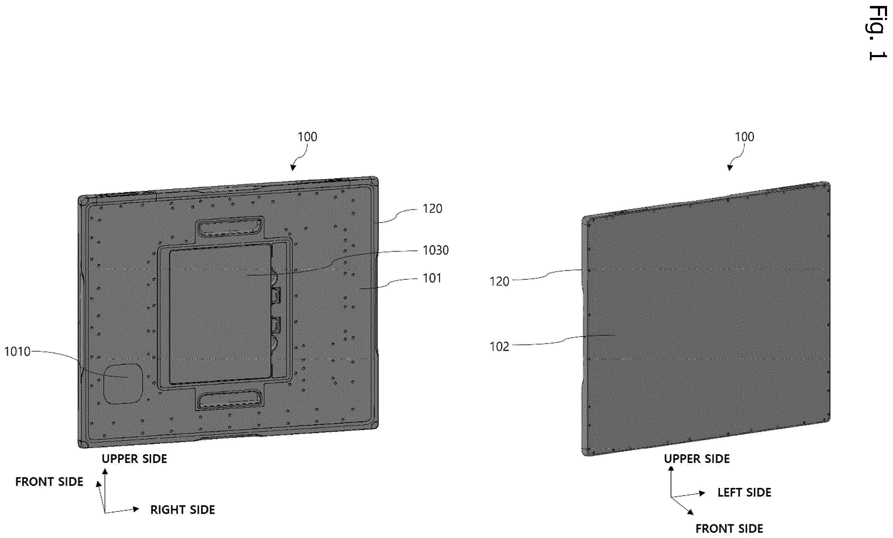

FIG. 1 is a diagram showing a radiation detector according to an embodiment of the present disclosure.

A radiation detector 100 may include a rear surface 101 and a front surface 102. The front surface 102 and the rear surface may contain a carbon material.

The detector 100 may further include a battery 1030. The detector 100 may include a space for mounting the battery 1030. In addition, the detector 100 may include a coil 1010 for supporting wireless charging. Hereinafter, the radiation detector 100 of the present disclosure will be described in more detail.

The radiation detector 100 of the present disclosure may be a component for detecting radiation to generate an electrical signal and generate a radiation image based on the electrical signal. The radiation detector 100 may detect radiation emitted from a radiation source and transmitted through a target object. The radiation may include at least one of X-rays, gamma rays, and some types of ultraviolet rays. The radiation detector 100 may detect the radiation to acquire a radiation image of the target object. For example, the radiation image acquired by the radiation detector 100 may include at least one of an X-ray image and a computed tomography (CT) image. The radiation detector 100 may have a waterproof structure or may be bendable.

First, the radiation detector 100 of the present disclosure may include a housing 120 to protect an internal structure thereof from external force. In addition, the housing 120 may provide a waterproof function and may be bendable. The housing 120 will be described in detail below.

The radiation detector 100 may include a radiation detection panel 110. The detection panel 110 may be divided into an indirect conversion type that acquires an electric signal indirectly from visible light using a scintillator and a direct conversion type that acquires an electric signal directly from radiation using photoconductors according to a method of acquiring an electric signal, and may be divided into a charge-coupled device (CCD) type using a charge-coupled device, a complementary metal-oxide-semiconductor (CMOS) type using a CMOS device of crystalline silicon, and an a-Si type using a thin film transistor (TFT) substrate of amorphous silicon according to a type of element that generates an electric signal.

The radiation detector 100 including the detection panel 110 may be provided with various sensors to implement digital image data with electric signals of the sensors and location information proportional to the amount of incident radiation. The radiation detector 100 may acquire photographing results in close to real time, secure high resolution and a wide dynamic range with relatively little radiation, and make storage and processing of photographing results easy due to the characteristics of digital data. The radiation detector 100 includes a readout signal unit that reads an electrical signal output from a pixel array, a gate driver that turns on a switching element so that the readout signal unit may read out an electrical signal, and the like, and the electrical signal detected by the readout signal unit is converted into an image signal through a certain processing process in a controller provided on a main board, and then transmitted to a display device for displaying an X-ray image.

The radiation detection panel 110 may detect radiation incident on a first surface. Here, the first surface may be a front surface (front side surface) of the radiation detection panel 110. The radiation detection panel 110 may have flexibility. That is, the radiation detection panel is flexible and bendable. When a surface of a subject is round, the radiation detection panel 110 may be bent to come into close contact with the surface of the subject. Since the radiation detection panel 110 is positioned in close contact with the surface of the subject, sharpness of the radiation image may be increased.

The radiation detector 100 may include the housing 120. The housing 120 may be in contact with at least one of a first surface of the radiation detection panel 110, a second surface facing the first surface, and a third surface other than the first surface and the second surface. The second surface may be a rear surface of the radiation detection panel 110. The third surface may be a side surface of the radiation detection panel. For example, the third surface may include at least one of an upper surface, a left side surface, a right side surface, and a lower surface.

The housing 120 may be a component for protecting the radiation detection panel 110. Since the radiation detection panel 110 is a sensitive component, the radiation detection panel 110 may be easily damaged by an external impact, and the quality of the radiation image may be degraded due to external stimulation. In addition, even when an external substance flows into the radiation detection panel 110, the quality of the radiation image may be degraded, or components included in the radiation detector 100 may be damaged. The housing 120 may prevent the radiation detection panel 110 and circuits included in the radiation detector 100 from being damaged by an external impact, alleviate the external impact, and prevent external substances from flowing into the inside of the radiation detector 100.

In addition, the housing 120 may support the radiation detection panel 110. The housing 120 may be a component for maintaining a shape of the radiation detection panel 110. The housing 120 is implemented with a hard material, and thus the radiation detection panel 110 may maintain a flat shape even when subjected to external force.

According to various embodiments of the present disclosure, since the radiation detection panel 110 is flexible and bendable, it may be difficult to keep the radiation detection panel 110 still relative to the subject when the housing 120 is not present. This is because the radiation detection panel 110 may be easily deformed by the movement of the subject or external force. Therefore, the housing 120 may be a component for supporting the radiation detection panel 110 so that the radiation detection panel 110 maintains a certain shape after being bent. The housing 120 may adjust the bending of the radiation detection panel 110 around a bending axis that is parallel to a first direction intersecting a second direction. That is, the radiation detection panel 110 may also be bent as much as the housing 120 is bent. Here, the first direction may be an upward direction. However, the first direction is not limited thereto and may be a downward direction.

The housing 120 may include various components for the operation of the radiation detector 100. For example, the housing 120 may include at least one of a control unit, a communication unit, an input unit, and an output unit for the operation of the radiation detector 100. For example, the housing 120 may include a control board 1040, and the control board may include at least one of the control unit, the communication unit, the input unit, and the output unit.

An internal structure of the radiation detector 100 will be described below in detail.

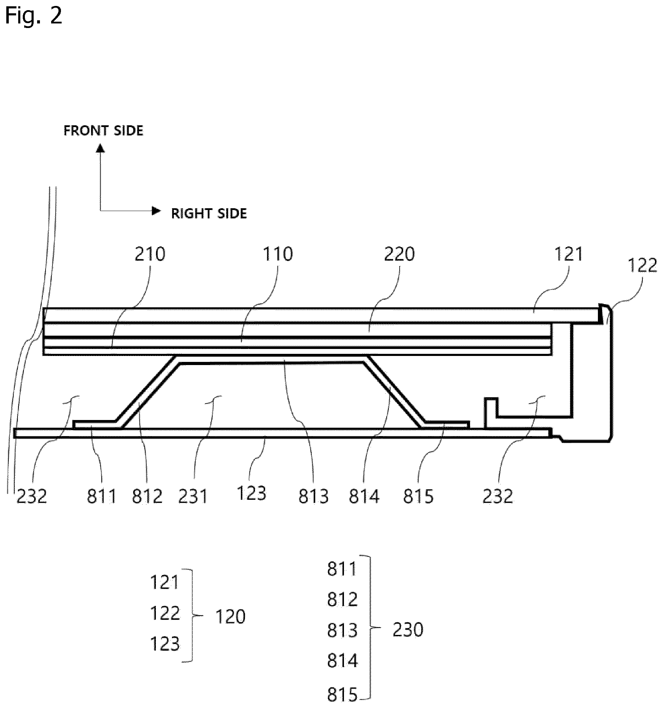

FIG. 2 shows a portion of a cross section of the radiation detector according to an embodiment of the present disclosure.

FIG. 2 shows a cross section along a plane perpendicular to the front surface of the detector 100.

As described above, the detector 100 may include the housing 120. The housing 120 may include a front surface 121 of the housing, a side surface 122 of the housing, and a rear surface 123 of the housing. The front surface 121 of the housing, the side surface 122 of the housing, and the rear surface 123 of the housing may be coupled to one another. At least two of the front surface 121 of the housing, the side surface 122 of the housing, and the rear surface 123 of the housing may be integrally formed, but the present disclosure is not limited thereto.

The detector 100 may include the detection panel 110. The detection panel 110 may be included inside the housing 120 and may be a component for detecting radiation.

The detector 100 may include a middle plate 210. The middle plate 210 may be included inside the housing 120. The middle plate 210 may be in contact with the detection panel 110. The middle plate 210 may be in contact with the rear of the detection panel 110. The middle plate 210 may support the detection panel 110. The middle plate 210 may be a component for fixing the detection panel 110. The detection panel 110 may not move with respect to the middle plate 210. The middle plate 210 may be made of a hard material. The middle plate 210 may maintain the detector 100 to have a certain shape. The detection panel 110 may acquire a uniform radiation image by means of the middle plate 210.

The detector 100 may include a supporting member 230. The supporting member 230 may be coupled to the middle plate 210. The supporting member 230 may be coupled to the rear of the middle plate 210. The supporting member 230 may be joined to the middle plate 210 by a screw or joined thereto by an adhesive.

The supporting member 230 may be coupled thereto by an adhesive layer formed on one end surface of the middle plate 210. That is, an adhesive layer may be located between the supporting member 230 and the middle plate 210. The adhesive layer may be a component for joining the supporting member 230 and the middle plate 210. The front surface and upper surface of the adhesive layer may each be coated with an adhesive. For example, the adhesive layer may be a double-sided tape.

The supporting member 230 may be coupled to the middle plate 210 by at least one fastening screw.

The supporting member 230 may support the middle plate 210. The middle plate 210 has a plate shape, and when external force is applied, it may be difficult to maintain the shape of the detector 100 with only the middle plate 210. The supporting member 230 may assist the middle plate 210 so that the detector 100 always has a constant shape. The supporting member 230 may be implemented with a hard material. The material of the supporting member 230 may include at least one of a metal, a plastic, carbon, and a composite material. The supporting member 230 may contain a metal material such as aluminum, magnesium, titanium, or steel. In addition, the supporting member 230 may contain a plastic such as at least one of polycarbonate (PC), polypropylene (PP), and polyamide (PA). The supporting member 230 may contain carbon. In addition, the supporting member 230 may contain a composite material including at least two of a metal, a plastic, PC, PP, PA, or carbon, but is not limited thereto.

The supporting member 230 may be coupled to the rear surface 123 of the housing. The supporting member 230 may be coupled to the front of the rear surface 123 of the housing. The supporting member 230 may be joined to the rear surface 123 of the housing by a screw or may be joined to the rear surface 123 by an adhesive.

By means of the supporting member 230, the components included in the detector 100 may always have a constant shape and the external force applied to the detector 100 may be distributed. Therefore, the detector 100 has the effect of always acquiring a uniform radiation image.

The cross section of the supporting member 230 may have a portion of a trapezoidal shape or a portion of an inverted trapezoidal shape. In addition, the cross section of the supporting member 230 may have the shape of one of a portion of a polygonal shape, a portion of an elliptical shape, and a portion of a circular shape. For example, the cross section of the supporting member 230 may have a portion of a rectangular shape, a portion of a triangular shape, a portion of an inverted triangular shape, a portion of a pentagonal shape, a portion of a hexagonal shape, a portion of an elliptical shape, or a portion of a circular shape. FIG. 2 shows a case where the cross section of the supporting member 230 has a portion of a trapezoidal shape. The fact that the supporting member 230 has the portion of the trapezoidal shape may indicate that the supporting member 230 has a shape that spreads out from the front to the rear. The fact that the supporting member 230 has the portion of the inverted trapezoidal shape may indicate that the supporting member 230 has a shape that spreads out from the rear to the front.

When the cross section of the supporting member 230 is trapezoidal, there is an effect that the influence of the supporting member 230 on the radiation image can be minimized. In addition, since a bent portion is created in the supporting member, the rigidity increases, and even when a length of the supporting member 230 is reduced, high rigidity can be secured, and thus the effect of weight reduction can be achieved.

The detector 100 may further include a filler having elasticity in a recess 231 formed by the supporting member 230. The filler may include expanded polypropylene (EPP). The filler is not limited as long as the filler is a material having elasticity. In addition, the detector 100 may also include a filler in a region 232 other than the recess 231 formed by the supporting member 230. In addition, at least one of the components of the detector 100 may be located in the recess 231. For example, a control board may be located in the recess 231. A filler may fill the remaining space after the control board is located in the recess 231 but is not limited thereto.

Referring to FIG. 2, an elastic layer 220 may be interposed between the detection panel 110 and the front surface 121 of the housing 120. The elastic layer may be implemented with PORON. However, the elastic layer is not limited to this, and materials with elasticity such as rubber, silicone, urethane, etc. may be used. The elastic layer 220 may prevent external force applied to the front surface 121 from being directly transmitted to the detection panel 110. Therefore, in particular, since the target object is located in front of the front surface 121, there may be many cases where the external force is applied to the front of the detection panel 110. The elastic layer 220 absorbs the external force applied to the front surface of the detection panel 110, which has the effect of allowing the detector to acquire a high-quality radiation image. In addition, the elastic layer 220 may fill the space between the front surface 121 and the detection panel 110 to keep the detection panel 110 in a flat state at all times. Therefore, the detection panel 110 may maintain a flat state, which is an optimal state for acquiring the radiation image.

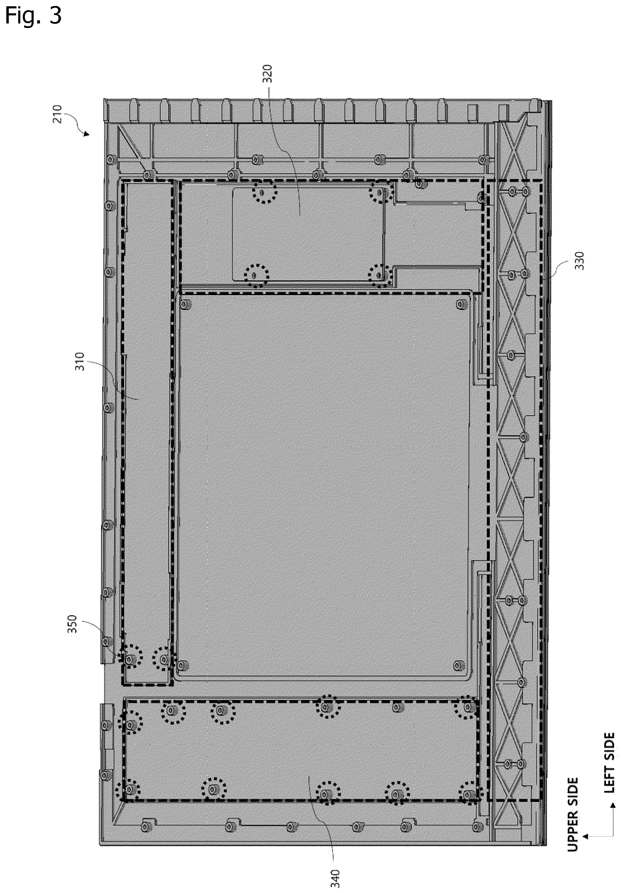

FIG. 3 is a diagram for describing a middle plate according to an embodiment of the present disclosure.

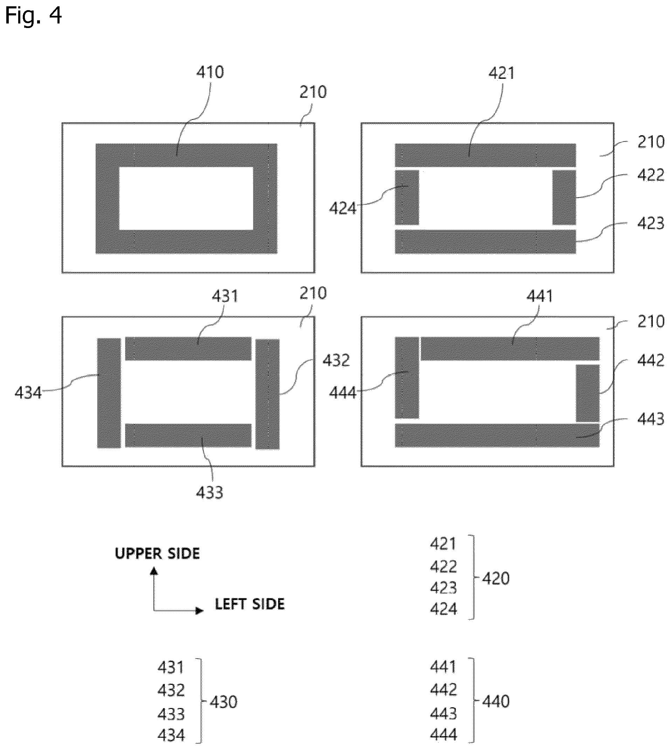

FIG. 4 is a diagram for describing a disposition of a supporting member according to an embodiment of the present disclosure.

FIG. 3 may be a perspective view of the middle plate 210 according to an embodiment of the present disclosure from behind. As described above, the middle plate 210 may be a component for supporting the detection panel 110. When the housing 120 is an outer frame of the detector 100, the middle plate 210 may be an internal frame of the detector 100. The middle plate 210 may have an area that is substantially the same as that of the detection panel 110. The detection panel 110 may be in contact with the front of the middle plate 210. The middle plate 210 may be in contact with the entire area of the detection panel 110. By means of the middle plate 210, the detection panel 110 may always have a flat shape.

The detector 100 may further include the supporting member 230 to support the detection panel 110 more firmly. The supporting member 230 may prevent distortion of the detector 100. In addition, the supporting member 230 may protect the detector 100 from external force. In addition, the main components of the detector 100 are located in a space between the supporting member 230 and the middle plate 210 and a space between the supporting member 230 and the housing 120, and thus the main components can be prevented from being affected by external force. Therefore, the detector of the present disclosure has the effect of having high durability. In particular, the detector 100 of the present disclosure has the effect of preventing a defect in which the detection panel is broken by external force.

FIG. 4 is a diagram of the detector 100 when viewed from behind. Referring to FIG. 4, the supporting member 230 may be formed in at least a portion of a region of the middle plate 210. The supporting member 230 may be coupled to the middle plate 210. The supporting member 230 may be coupled to a region for the supporting member included in at least a portion of a region of the middle plate. Here, the region of the supporting member 230 or the region of the middle plate 210 may be a region in a plane formed by a first direction and a second direction. An area region of the region of the supporting member may be smaller than or equal to an area of the region of the middle plate. The region of the supporting member 230 may be included in the region of the middle plate 210. The supporting member 230 may be coupled to a portion of the region of the middle plate 210. For example, the supporting member 230 may be formed along an edge of the middle plate 210, but is not limited thereto. The supporting member 230 may occupy a region including the center of the middle plate 210.

The supporting member 230 may be implemented as one of a supporting member 410 of a first shape, a supporting member 420 of a second shape, a supporting member 430 of a third shape, and a supporting member 440 of a fourth shape. The present disclosure will be described based on the supporting member 440 of the fourth type, but is not limited thereto. The supporting member 230 may be implemented as one of the first shape to fourth shape and may also be implemented in a shape different from the first shape to fourth shape.

The supporting member 410 of the first shape may be formed integrally. The supporting member 410 of the first shape is formed integrally, and thus assembly can be good.

The supporting member 420 of the second shape may include a plurality of sub-supporting members 421 to 424. More specifically, the supporting member 420 of the second shape may include a first supporting member 421, a second supporting member 422, a third supporting member 423, and a fourth supporting member 424. The first supporting member 421 and the third supporting member 423 may extend to the left and right. The second supporting member 422 and the fourth supporting member 424 may extend vertically and may be located between the first supporting member 421 and the third supporting member 423.

The supporting member 430 of the third shape may include a plurality of sub-supporting members 431 to 434. More specifically, the supporting member 430 of the third shape may include a first supporting member 431, a second supporting member 432, a third supporting member 433, and a fourth supporting member 434. The second supporting member 432 and the fourth supporting member 434 may extend vertically. The first supporting member 431 and the third supporting member 433 may extend to the left and right. The first supporting member 431 and the third supporting member 433 may be located between the second supporting member 432 and the fourth supporting member 434.

The supporting member 440 of the fourth shape may have a free shape. The supporting member 440 of the fourth shape may be optimized in a shape capable of best protecting components included in the detector 100. The supporting member 440 of the fourth shape may prevent the detector 100 from being twisted or distorted while protecting the components included in the detector 100 from external force. In particular, the detector 100 of the present disclosure has an effect of preventing the detection panel from being broken by external force. In addition, the detector 100 including the supporting member 440 of the fourth shape of the present disclosure has an effect capable of making the detector 100 slimmer and smaller by optimizing the arrangement of the components.

The supporting member 440 of the fourth shape may include a plurality of sub-supporting members 441 to 444. More specifically, the supporting member 440 of the fourth shape may include a first supporting member 441, a second supporting member 442, a third supporting member 443, and a fourth supporting member 444. The second supporting member 442 and the fourth supporting member 444 may extend vertically. The first supporting member 441 and the third supporting member 443 may extend to the left and right. The second supporting member 442 may be located between the first supporting member 441 and the third supporting member 443. In addition, the fourth supporting member 444 may extend from the right side of the first supporting member 441 to the upper side of the third supporting member 443.

The supporting member 230 may include a plurality of supporting members. That is, the supporting member 230 may function as the supporting member 230 by including four independent sub-supporting members, similar to one of the second type supporting member 420 and the fourth type supporting member 440. Unlike in FIG. 4, the supporting member 230 may be implemented with two independent sub-supporting members, three independent sub-supporting members, or four or more independent sub-supporting members. As the number of sub-supporting members increases, necessary places may be reinforced, and thus there is an effect of increasing the rigidity of the detector 100. In addition, as the number of sub-supporting members decreases, the assemblability of the detector 100 increases.

Referring again to FIG. 3, a place where the supporting member 230 is located may be formed in the middle plate 210. For example, the middle plate 210 may include a first supporting member joining part 310, a second supporting member joining part 320, a third supporting member joining part 330, and a fourth supporting member joining part 340. The middle plate 210 may have a screw joining hole, which is for joining the middle plate 210 and is formed therein, with the supporting member 230 by a screw that penetrates through the supporting member 230. A screw hole 350 may be formed on at least one of the first supporting member joining part 310, the second supporting member joining part 320, the third supporting member joining part 330, and the fourth supporting member joining part 340.

At least one of the first supporting member joining part 310, the second supporting member joining part 320, the third supporting member joining part 330, and the fourth supporting member joining part 340 may be firmly joined with the supporting member 230 by a screw. For example, the first supporting member joining part 310, the second supporting member joining part 320, and the fourth supporting member joining part 340 may be firmly joined with the first supporting member, the second supporting member, and the fourth supporting member by screws. In addition, the third supporting member joining part 330 and the third supporting member may be connected by an adhesive layer.

At least one of the first supporting member joining part 310, the second supporting member joining part 320, the third supporting member joining part 330, and the fourth supporting member joining part 340 may have a groove formed therein, and the supporting member 230 may be inserted into the groove and joined therewith. Therefore, the supporting member 230 and the middle plate 210 can be firmly joined with each other, and the assemblability can be increased.

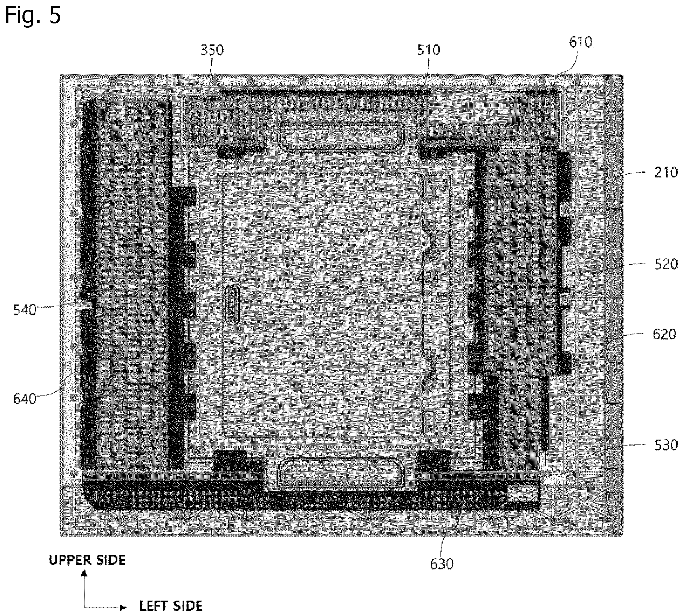

FIG. 5 is a diagram of the middle plate and the supporting member according to an embodiment of the present disclosure when viewed from the rear side.

Referring to FIG. 5, the middle plate 210 and the supporting member 230 may be joined with each other by an adhesive layer. A first supporting member 610 may be joined with the middle plate 210 by a first adhesive layer 510. A second supporting member 620 may be joined with the middle plate 210 by a second adhesive layer 520. A third supporting member 630 may be joined with the middle plate 210 by a third adhesive layer 530. A fourth supporting member 640 may be joined with the middle plate 210 by a fourth adhesive layer 540. The first adhesive layer 510 to the fourth adhesive layer 540 may be located on the same plane, but is not limited thereto.

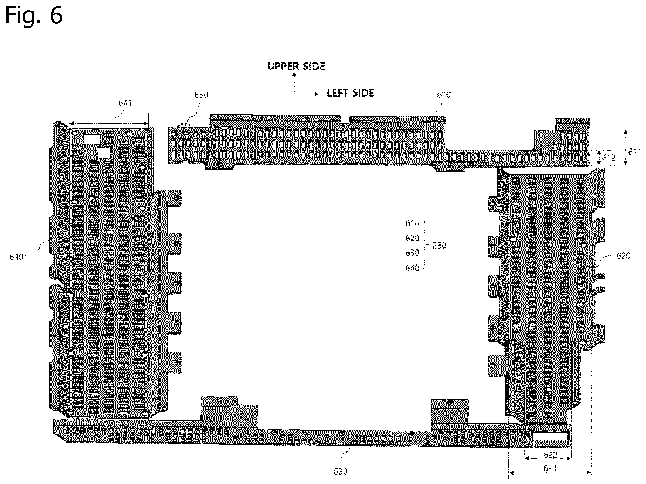

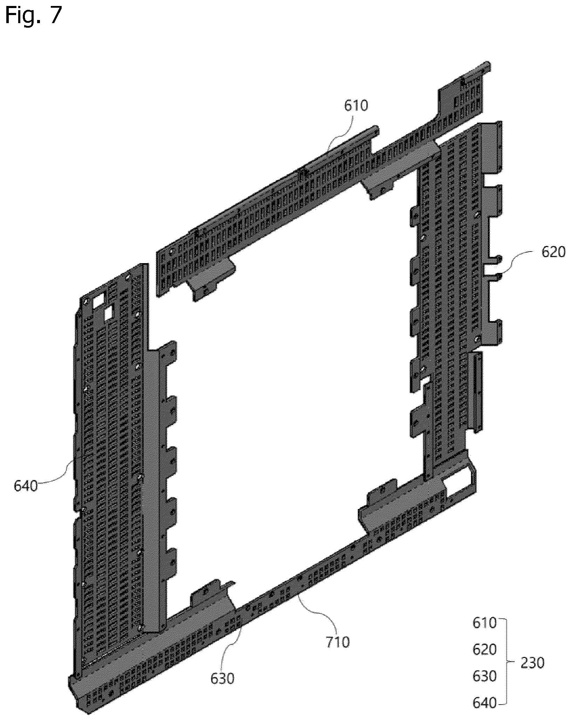

FIG. 6 is a diagram for describing a supporting member according to an embodiment of the present disclosure. In addition, FIG. 7 is a diagram for describing a supporting member according to an embodiment of the present disclosure.

FIGS. 6 and 7 are perspective views of the supporting member according to an embodiment of the present disclosure when viewed from the rear side. FIG. 7 shows the supporting member 230 viewed from an angle different from that in FIG. 6 in order to show the bending of the supporting member 230 in more detail.

The supporting member 230 may include the first supporting member 610, the second supporting member 620, the third supporting member 630, and the fourth supporting member 640. The supporting member 230 may have a plurality of holes formed therein to reduce the weight thereof. In addition, the plurality of holes formed in the supporting member 230 allow air to flow freely, thereby enabling efficient cooling of the detector 100. In addition, the supporting member 230 is made of a material having high thermal conductivity, and thus heat can be effectively spread. Therefore, the detection panel 110, which is sensitive to heat, can generate high-quality radiation images. In addition, the supporting member 230 has the effect capable of preventing distortion of the detector 100 and protecting the detector 100 from an external impact. In particular, the supporting member 230 has the effect capable of preventing the detection panel included in the detector 100 from being damaged, particularly due to external force.

In addition, since the supporting member 230 has a screw hole 650 formed therein, a screw is fixed to the screw hole 350 of the middle plate 210 by passing through the screw hole 650 of the supporting member 230, and thus the supporting member 230 and the middle plate 210 may be fixed.

The supporting member 230 of FIG. 6 may have the same shape as the supporting member 440 of the fourth shape of FIG. 4.

The supporting member 230 may include at least one coupling surface and inclined surface. The coupling surface may include at least two of a first coupling surface 811 to a sixth coupling surface 915. In addition, the inclined surface may include at least two of a first inclined surface 812 to a fourth inclined surface 914.

At least one of the coupling surface and the inclined surface may have a plurality of holes formed therein. For example, at least one of the second coupling surface 813 and the third coupling surface 815 may have a plurality of holes formed therein. The second coupling surface 813 of each of the first supporting member 610, the second supporting member 620, and the fourth supporting member 640 may have a plurality of holes formed therein. In addition, the third coupling surface 815 of the third supporting member 630 may have a plurality of holes formed therein. An extending direction of the plurality of holes may be perpendicular to the extending direction of the supporting member. For example, the extending direction of the first supporting member 610 may be the second direction. That is, a length of the first supporting member 610 in the second direction may be greater than a length thereof in the first direction. The second direction may be, for example, the side in the leftward direction. The extending direction of the plurality of holes formed in the second coupling surface 813 of the first supporting member 610 may be the first direction perpendicular to the second direction. That is, a length of one of the plurality of holes in the first direction may be greater than a length thereof in the second direction. The first direction may be, for example, an upward direction.

The plurality of holes formed in the second coupling surface 813 may have a rectangular shape in which the length in the first direction or the second direction is greater than the length in the second direction or the first direction, and the plurality of holes formed in the third coupling surface 815 may have a square shape. A size of one of the plurality of holes formed in the second coupling surface 813 may be larger than a size of one of the plurality of holes formed in the third coupling surface 815. The reason why the shapes and sizes of the plurality of holes formed in the second coupling surface 813 and the third coupling surface 815 are different from one another may be due to differences in components and functions located near the second coupling surface 813 or the third coupling surface 815. The third coupling surface 815 may be located closer to an edge of the detector 100 than the second coupling surface 813. Since the third coupling surface 815 is located at the edge of the detector 100, the third coupling surface 815 may need to be more rigid. Therefore, a size of the hole formed in the third coupling surface 815 may be small. In addition, the second coupling surface 813 may be closer to the control board, power board, or battery 1030 than the third coupling surface 815. In order to effectively dissipate heat generated from the control board, power board, or battery 1030 to the outside, the holes formed in the second coupling surface 813 may be larger than the holes formed in the third coupling surface 815 to facilitate the flow of air.

The first supporting member 610 may extend in the second direction and may be located at a portion of the middle plate in the first direction. In the present disclosure, the second direction may mean a side in the leftward direction, but is not limited thereto. The second direction may mean a side in the rightward direction.

In addition, the first direction may also mean a side in the upward direction, but is not limited thereto. The first direction may mean a side in the downward direction.

The first supporting member extend in the leftward direction and may be located at a portion of the middle plate in an upward direction.

The second supporting member 620 may extend in a direction opposite to the first direction from at least a portion of the first supporting member 610 at a side in the direction opposite to the first direction. In addition, the second supporting member 620 may be located at a portion of the middle plate in the second direction.

The second supporting member may extend in a downward direction from at least a portion of the first supporting member at a side in the downward direction and may be located at a portion of the middle plate in the leftward direction.

The third supporting member 630 may extend in a direction opposite to the second direction from at least a portion of the second supporting member 620 at a side in the direction opposite to the first direction. The third supporting member 630 may be located at a portion of the middle plate 210 in the direction opposite to the first direction.

The third supporting member may extend in the rightward direction from at least a portion of the second supporting member at a side in the downward direction, and may be located at a portion of the middle plate in the downward direction.

The fourth supporting member 640 may extend in the first direction from at least a portion of the third supporting member 630 at a side in the first direction to at least a portion at a side in the direction opposite to the second direction of the first supporting member 610. The fourth supporting member 640 may be located at a portion of the middle plate 210 in a direction opposite to the second direction.

The fourth supporting member may extend in the upward direction from at least a portion of the third supporting member at a side in the upward direction to at least a portion of the first supporting member at a side in the rightward direction, and may be located at a portion of the middle plate in the rightward direction.

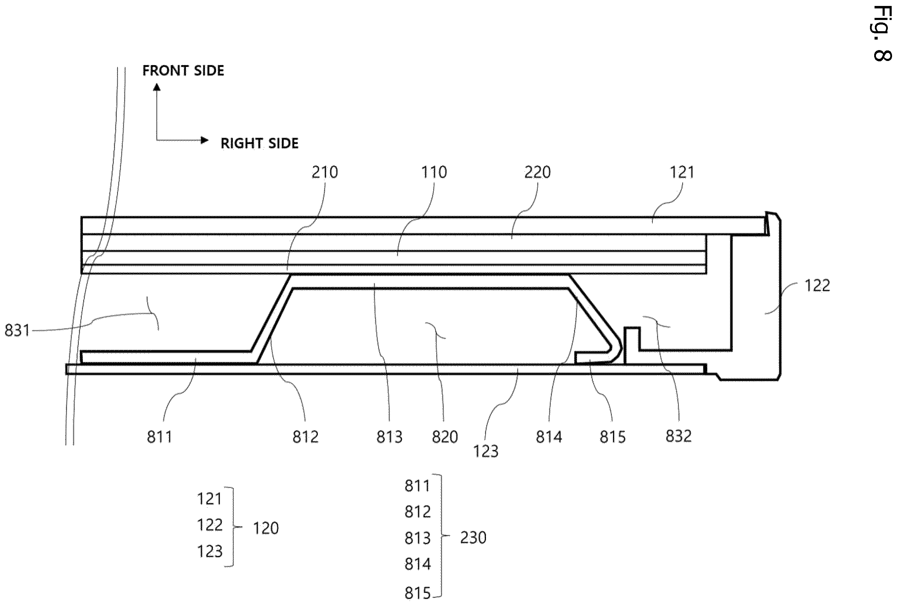

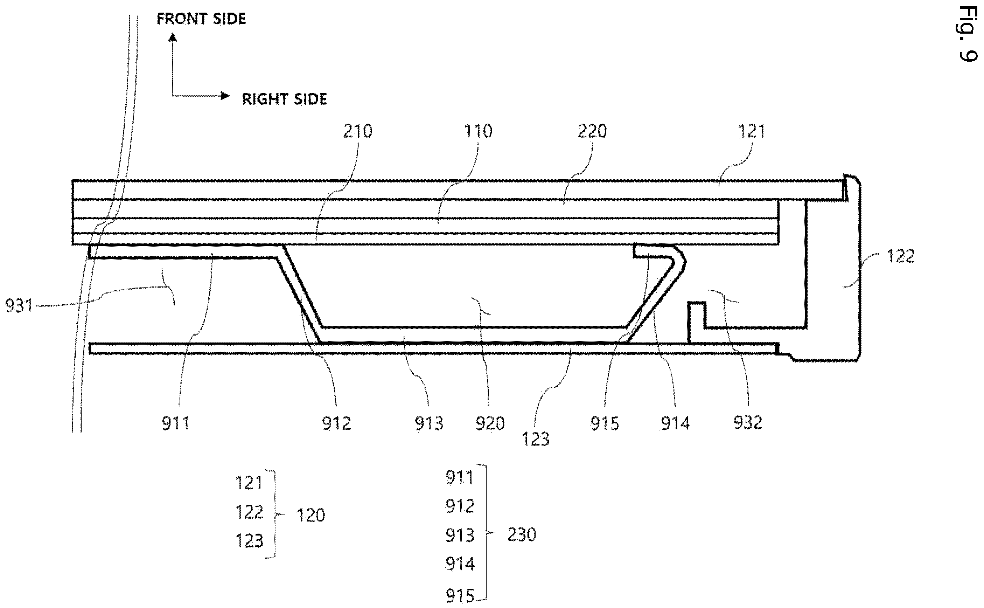

FIG. 8 shows a cross section of a detector according to an embodiment of the present disclosure. FIG. 9 shows a cross section of a detector according to an embodiment of the present disclosure.

FIG. 8 shows a cross section of the supporting member 230 having a portion of a trapezoidal shape. In addition, FIG. 9 shows a cross section of the supporting member 230 having a portion of an inverted trapezoidal shape.

Referring to FIG. 8 together with FIG. 2 below, at least a portion of the supporting member 230 may include at least one of the first coupling surface 811, the first inclined surface 812, the second coupling surface 813, the second inclined surface 814, and the third coupling surface 815. At least one of the first coupling surface 811, the first inclined surface 812, the second coupling surface 813, the second inclined surface 814, and the third coupling surface 815 may be formed on at least a portion of one of the first supporting member 610, the second supporting member 620, the third supporting member 630, and the fourth supporting member 640. The first supporting member 610, the second supporting member 620, the third supporting member 630, and the fourth supporting member 640 all include the first coupling surface 811, the first inclined surface 812, the second coupling surface 813, the second inclined surface 814, and the third coupling surface 815, but the first coupling surface 811, the first inclined surface 812, the second coupling surface 813, the second inclined surface 814, and the third coupling surface 815 may be formed in a partial region of one of the first supporting member 610, the second supporting member 620, the third supporting member 630, and the fourth supporting member 640. For example, the first coupling surface 811 may be formed only in a partial region of the first supporting member 610 in the longitudinal direction.

The first coupling surface 811 may be coupled to the rear surface 123 of the housing 120 and may be parallel to the rear surface 123 of the housing 120. The first coupling surface 811 may be joined with the rear surface 123 of the housing 120 by an adhesive or a screw, but is not limited thereto. The first coupling surface 811 may be in contact with or coupled to the middle plate 210. The first coupling surface 811 may be coupled to at least one of the rear surface 123 and the middle plate 210. The first coupling surface 811 may be coupled to the rear surface 123 and the middle plate 210, and thus the detector 100 can be made more robust. Alternatively, the first coupling surface 811 may be coupled to one of the rear surface 123 or the middle plate 210, and thus external force applied to the detector 100 can be blocked from being transmitted to the inside thereof.

The first inclined surface 812 may be coupled to the first coupling surface 811 and may have a predetermined inclination angle with respect to the rear surface 123. For example, the predetermined inclination angle may be 40 degrees or more and 50 degrees or less. The more the first inclined surface 812 is parallel to the first coupling surface 811, the more the effect of protecting internal components of the detector 100 from external force or preventing distortion of the detector 100 can be reduced. In addition, since the distance to which radiation penetrates the first inclined surface 812 increase as the first inclined surface 812 is more perpendicular to the first coupling surface 811, the first inclined surface 812 may appear in the radiation image. That is, the quality of the radiation image can be reduced. In particular, when the supporting member 230 is implemented with a material having low radiolucency, a back scattering phenomenon may occur depending on the distance to which radiation penetrates the supporting member 230. That is, the shape of the supporting member 230 appears in the radiation image. However, when using the supporting member 230 having a trapezoidal shape or inverted trapezoidal shape formed by the first coupling surface 811, the first inclined surface 812, the second coupling surface 813, the second inclined surface 814, or the third coupling surface 815, the back scattering phenomenon can be minimized. This is because the distance to which the radiation penetrates the supporting member 230 is substantially the same over the entire region of the detector 100.

In addition, since a bent portion is created in the supporting member 230 by the first inclined surface 812 and the second inclined surface 814, the rigidity is increased, and even when the length of the supporting member 230 is reduced, high rigidity can be secured, and thus the effect of weight reduction can be achieved.

When the predetermined inclination angle is 40 degrees or more and 50 degrees or less, the supporting member 230 may protect the internal components of the detector 100, prevent distortion, and minimize the influence on the radiation image. The first inclined surface 812 may have a smaller thickness than at least one of the first coupling surface 811, the second coupling surface 813, and the third coupling surface 815. In addition, a radiation-transparent material is used in the supporting member 230, and thus an effect capable of minimizing the influence of the first inclined surface 812 on the image can be achieved.

Of course, when the supporting member 230 is implemented using a material having high radiation transparency, since this back scattering phenomenon does not occur, a predetermined inclination angle may be 10 degrees or more and 90 degrees or less.

The second coupling surface 813 may be coupled to the first inclined surface 812, coupled to the middle plate 210, and parallel to the middle plate 210. The second coupling surface 813 may be joined with the rear surface of the middle plate 210 by an adhesive or screw, but is not limited thereto. The second coupling surface 813 may be in contact with or coupled to the rear surface 123. The second coupling surface 813 may be coupled to at least one of the rear surface 123 and the middle plate 210.

The second coupling surface 813 has a plurality of holes formed therein, and thus air inside the detector 100 can circulate smoothly, and the inside of the detector 100 can be cooled by the flow of air. Therefore, the detection panel 110 can acquire a radiation image without being influenced by heat, and accordingly, the detector 100 has the effect capable of acquiring a high-quality radiation image.

A width 641 of the second coupling surface 813 may be greater than or equal to a width of at least one of the first coupling surface 811, the first inclined surface 812, the second inclined surface 814, and the third coupling surface 815. Here, the width may represent a length in the direction toward the edge of the detector 100 from the center thereof. In particular, a width of each of the second coupling surface 813 of the first supporting member 610, the second supporting member 620, and the fourth supporting member 640 may be greater than or equal to the width of each of at least one of the first coupling surface 811, the first inclined surface 812, the second inclined surface 814, and the third coupling surface 815, but is not limited thereto. The width of the second coupling surface 813 of the third supporting member 630 may be smaller than the width of each of at least one of the first coupling surface 811, the first inclined surface 812, the second inclined surface 814, and the third coupling surface 815. In addition, a width of a third coupling surface 710 of the third supporting member 630 may be greater than or equal to the width of a first coupling surface or second coupling surface of the third supporting member 630.

The width of the second coupling surface 813 of at least one of the first supporting member 610, the second supporting member 620, the third supporting member 630, and the fourth supporting member 640 may not be constant. For example, the width of the first supporting member 610 may have a long width 611 and a short width 612. In addition, the width of the second supporting member 620 may have a long width 621 and a short width 622.

Various components may be located on the rear side of the second coupling surface 813. For example, parts such as a control board may be located on the rear side of the second coupling surface 813, and thus distortion can be minimized and the defect rate can be reduced. In addition, the control board may be protected from an external impact by means of the second coupling surface 813.

The second inclined surface 814 may be coupled to the second coupling surface 813 and may have a predetermined inclination angle with respect to the rear surface 123 of the housing 120. The second inclined surface 814 may not be parallel to the first inclined surface 812. For example, the predetermined inclination angle may be 40 degrees or more and 50 degrees or less. When the predetermined inclination angle is 40 degrees or more and 50 degrees or less, the supporting member 230 may protect the internal components of the detector 100, prevent distortion, and minimize the influence on the radiation image. The second inclined surface 814 may have a smaller thickness than each of at least one of the first coupling surface 811, the second coupling surface 813, and the third coupling surface 815. In addition, a radiation-transparent material is used in the supporting member 230, and thus the effect capable of minimizing the influence of the second inclined surface 814 on the image can be achieved.

The first inclined surface 812 and the second inclined surface 814 may not be in parallel. The first inclined surface 812 and the second inclined surface 814 may have a predetermined angle with respect to the middle plate 210 or the rear surface 123 of the housing 120. Among the partial shapes of the trapezoid formed by the cross section of the supporting member 230, the first inclined surface 812 and the second inclined surface 814 may correspond to side surfaces of the trapezoid.

The third coupling surface 815 may be coupled to the second inclined surface 814 and the rear surface 123 of the housing 120. The third coupling surface 815 may be parallel to the rear surface 123, but is not limited thereto. The third coupling surface 815 may be in contact with or coupled to the middle plate 210. The third coupling surface 815 may be coupled to at least one of the rear surface 123 and the middle plate 210.

In FIG. 2, the third coupling surface 815 may extend in a direction opposite to the second direction, and in FIG. 8, the third coupling surface 815 may extend in the second direction. At least one of the first supporting member 610, the second supporting member 620, the third supporting member 630, and the fourth supporting member 640 may have at least one of the shape of the third coupling surface 815 of FIG. 2 and the shape of the third coupling surface 815 of FIG. 8. For example, referring to FIG. 6, the upper part of the second supporting member 620 has the shape of the third coupling surface 815 of FIG. 2, and the lower part of the second supporting member 620 has the shape of the third coupling surface 815 of FIG. 8.

The third coupling surface 815 may be located closer to the edge of the detector 100 than the first coupling surface 811 or the second coupling surface 813. At least one of the third coupling surfaces 815 of at least one of the first supporting member 610, the second supporting member 620, the third supporting member 630, and the fourth supporting member 640 may have a plurality of holes formed therein. The plurality of holes may allow the air inside the detector 100 to circulate smoothly, and the inside of the detector 100 may be cooled by the flow of air. For example, the third coupling surface 710 of the third supporting member 630 of FIG. 7 may have a plurality of holes formed therein. The shape of the plurality of holes formed in the third coupling surface 710 of the third supporting member 630 may be substantially square. The shape of the plurality of holes formed in the second coupling surface 813 of the first supporting member 610, the second supporting member 620, and the fourth supporting member 640 may be rectangular, and the plurality of holes may have a greater size than the hole of the third supporting member 630. The width of the third supporting member 630 is smaller than or equal to that of the first supporting member 610, the second supporting member 620, and the fourth supporting member 640, but the plurality of holes formed in the third supporting member 630 are relatively small, and thus the strength of the third supporting member 630 may be substantially the same as that of the other supporting members. In addition, the supporting member 230 can be made lightweight and the cooling efficiency can be increased using the plurality of holes.

The width of the third coupling surface 710 of the third supporting member 630 may be greater than or equal to the width of the first coupling surface or the second coupling surface of the third supporting member 630. The third supporting member 630 may have a large surface in contact with the rear surface 123.

The first supporting member 610, the second supporting member 620, the third supporting member 630, and the fourth supporting member 640 have shapes as shown in FIG. 8, thereby minimizing distortion of the detector 100 and protecting the internal components of the detector 100 from external force. In addition, the space inside the detector 100 may be efficiently utilized by the supporting member 230 as shown in FIG. 8, and thus the detector 100 can be made thin and the bezel can be minimized. That is, an effect that the detector 100 can be made smaller and lightweight can be achieved.

At least two of the rear surface 123, the first inclined surface 812, the second coupling surface 813, and the second inclined surface 814 may form a first space 820. The first space 820 may correspond to the recess 231. The detector 100 may include a filler located in the first space 820. However, the filler may be located in a space other than the first space 820. Since the filler has already been described above, duplicate description thereof will be omitted.

A second space 831 and a third space 832 may be further included inside the detector 100. The second space 831 may be a space formed by at least two of the middle plate 210, the first coupling surface 811, the rear surface 123, and the first inclined surface 812. In addition, the third space 832 may be a space formed by at least two of the middle plate 210, the second inclined surface 814, the rear surface 123, and the third coupling surface 815. The detector 100 may further include a filler in at least one of the second space 831 and the third space 832.

Components of the detector 100 may be located in at least one of the first space 820, the second space 831, and the third space 832. For example, at least one of a coil 1010, a power board 1020, a battery 1030, and a control board 1040 may be included in at least one of the first space 820, the second space 831, and the third space 832. The supporting member 230 may increase the rigidity of the detector 100 to prevent the detector 100 from being distorted and prevent various components included in the detector 100 from being affected by external force.

As described above, FIG. 9 shows the inverted trapezoidal supporting member 230.

Referring to FIG. 9, at least a portion of the supporting member 230 may include at least one of the fourth coupling surface 911, the third inclined surface 912, the fifth coupling surface 913, the fourth inclined surface 914, and the sixth coupling surface 915. At least one of the fourth coupling surface 911, the third inclined surface 912, the fifth coupling surface 913, the fourth inclined surface 914, and the sixth coupling surface 915 may be formed on at least a portion of one of the first supporting member 610, the second supporting member 620, the third supporting member 630, and the fourth supporting member 640. The first supporting member 610, the second supporting member 620, the third supporting member 630, and the fourth supporting member 640 all include the fourth coupling surface 911, the third inclined surface 912, the fifth coupling surface 913, the fourth inclined surface 914, and the sixth coupling surface 915, but the fourth coupling surface 911, the third inclined surface 912, the fifth coupling surface 913, the fourth inclined surface 914, and the sixth coupling surface 915 may be formed only in a partial region of one of the first supporting member 610, the second supporting member 620, the third supporting member 630, and the fourth supporting member 640. For example, the fourth coupling surface 911 may be formed only on a portion of the first supporting member 610 in the longitudinal direction.

The fourth coupling surface 911 may be coupled to the middle plate 210 and may be parallel to the middle plate 210, but is not limited thereto. The fourth coupling surface 911 may be in contact with or coupled to the rear surface 123. When the description of the component coupled to the rear surface 123 is modified to describe the component as being coupled to the middle plate 210, the description of the first coupling surface 811 may be applied to the fourth coupling surface 911.

The third inclined surface 912 may be coupled to the fourth coupling surface 911 and may have a predetermined inclination angle with respect to the middle plate 210. The description of the first inclined surface 812 may be applied to the third inclined surface 912.

The fifth coupling surface 913 may be coupled to the third inclined surface 912, coupled to the rear surface 123 of the housing 120, and parallel to the rear surface 123, but is not limited thereto. The fifth coupling surface 913 may be in contact with or coupled to the middle plate 210. When the description of the component coupled to the middle plate 210 is modified to describe the component as being coupled to the rear surface 123, the description of the second coupling surface 813 may be applied to the fifth coupling surface 913.

The fourth inclined surface 914 may be coupled to the fifth coupling surface 913, may have a predetermined inclined angle with respect to the middle plate 210, and may not be parallel to the third inclined surface 912. The description of the second inclined surface 814 may be applied to the fourth inclined surface 914.

The sixth coupling surface 915 may be coupled to the fourth inclined surface 914, coupled to the middle plate 210, and parallel to the middle plate 210, but is not limited thereto. The sixth coupling surface 915 may be in contact with or coupled to the rear surface 123. When the description of the component coupled to the rear surface 123 is modified to describe the component as being coupled to the middle plate 210, the description of the third coupling surface 815 may be applied to the sixth coupling surface 915.

At least two of the middle plate 210, the third inclined surface 912, the fifth coupling surface 913, and the fourth inclined surface 914 may form a fourth space 920. The fourth space 920 may correspond to the recess 231. The detector 100 may include a filler located in the fourth space 920. However, the filler may also be located in a space other than the fourth space 920. Since the filler has already been described above, duplicate description thereof will be omitted.

A fifth space 931 and a sixth space 932 may be further included inside the detector 100. The fifth space 931 may be a space formed by at least two of the middle plate 210, the fourth coupling surface 911, the rear surface 123, and the third inclined surface 912. The sixth space 932 may be a space formed by at least two of the middle plate 210, the fourth inclined surface 914, the rear surface 123, and the sixth coupling surface 915. The detector 100 may further include a filler in at least one of the fifth space 931 and the sixth space 932.

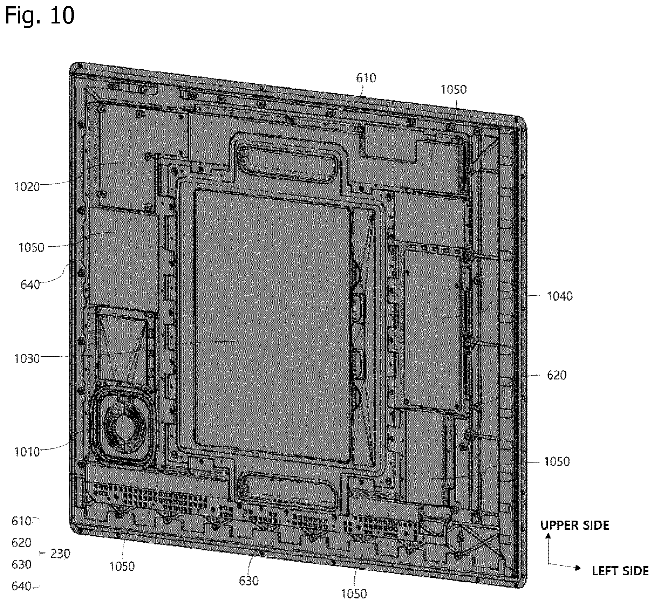

FIG. 10 may be a diagram for describing components included in a detector according to an embodiment of the present disclosure.

FIG. 10 is a diagram of the detector 100 viewed from behind.

The detector 100 may include a receiving coil 1010 for wireless charging. The receiving coil 1010 may correspond to the coil 1010. The battery 1030 may be charged by energy received from the outside by the receiving coil 1010.

The detector 100 may include the power board 1020. The power board 1020 may convert energy received from the receiving coil 1010 into electric energy for charging the battery 1030 or convert energy of the battery 1030 into electric energy for consumption by the detector 100.

The battery 1030 of the detector 100 is detachable and attachable but is not limited thereto.

The battery 1030 may be located in a place where the supporting member 230 is not formed. That is, the detector 100 may include the battery 1030 in a region of the middle plate where the supporting member is not formed. A thickness of a cell included in the battery 1030 may be smaller than or equal to a thickness of the supporting member 230, but is not limited thereto. The thickness of the cell included in the battery 1030 may be greater than the thickness of the supporting member 230. In addition, the supporting member 230 may have a form that surrounds the battery 1030 in a view of a plane formed by the first direction and the second direction.

A space for a battery may be formed in a region of the middle plate where the supporting member is not formed. The size of the sum of the region of the supporting member and the region of the battery may be smaller than or equal to the size of the region of the middle plate. A region of the middle plate other than the region of the supporting member and the region of the battery may be referred to as a remaining region. The remaining region may be a space where screw holes for joining components are formed, a space for electronic components, or a space for circulating air. In the present disclosure, at least one of the region of the middle plate, the region of the supporting member, and the region of the battery may be a region on a plane formed by the first direction and the second direction. When an external impact is applied, the supporting member 230 may absorb the impact, and the impact may not be transmitted to the battery 1030.

For example, the battery 1030 may be located within a space formed by the first supporting member 610, the second supporting member 620, the third supporting member 630, and the fourth supporting member 640. That is, the first supporting member 610 may be located on an upper side of the battery 1030, the second supporting member 620 may be located on the left side thereof, the third supporting member 630 may be located on the lower side thereof, and the fourth supporting member 640 may be located on the right side thereof. Since all sides of the battery 1030 are protected by the supporting member 230, the battery 1030 may be hardly affected by an external impact. Therefore, the detector 100 according to the present disclosure can be very safe.

The detector 100 may include the control board 1040. The control board 1040 may include at least one of a control unit, a communication unit, an input unit, and an output unit.

As described above, a filler 1050 may be located in the recess included in the supporting member 230. The filler 1050 may serve to fill an empty space inside the detector. The hole formed in the supporting member 230 may be a space formed for the filler 1050 to be firmly joined to the supporting member 230. The filler 1050 not only absorbs external force, but also ensures that the internal components of the detector 100 are always in the same location relative to each other even when external force is applied to the detector 100, thereby increasing the durability of the detector 100.

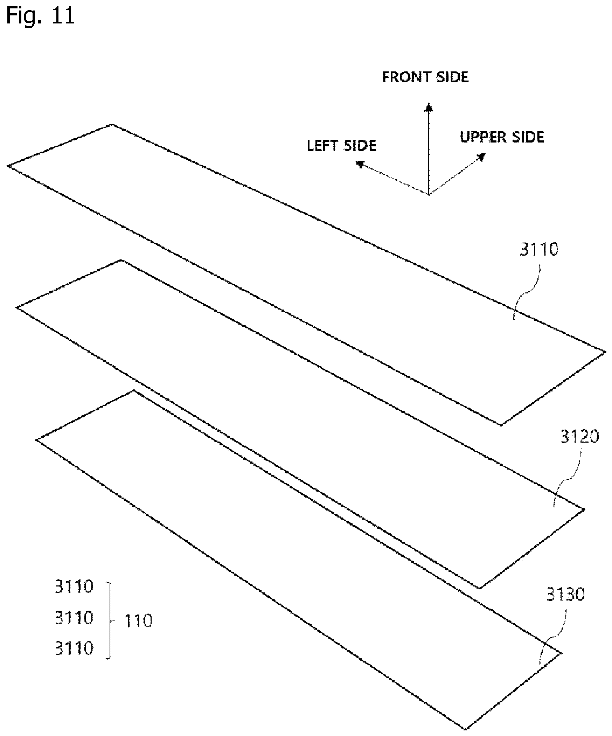

FIG. 11 is a diagram for describing a radiation detection panel according to an embodiment of the present disclosure.

The radiation detection panel 110 of the present disclosure may include a front scintillator 3110, a thin film transistor (TFT) panel 3120, and a rear scintillator 3130.

The front scintillator 3110 is a component that receives radiation and emits visible light. The TFT panel 3120 may be a component located on the rear surface of the front scintillator 3110. The rear scintillator 3130 may be located on the rear surface of the TFT panel 3120

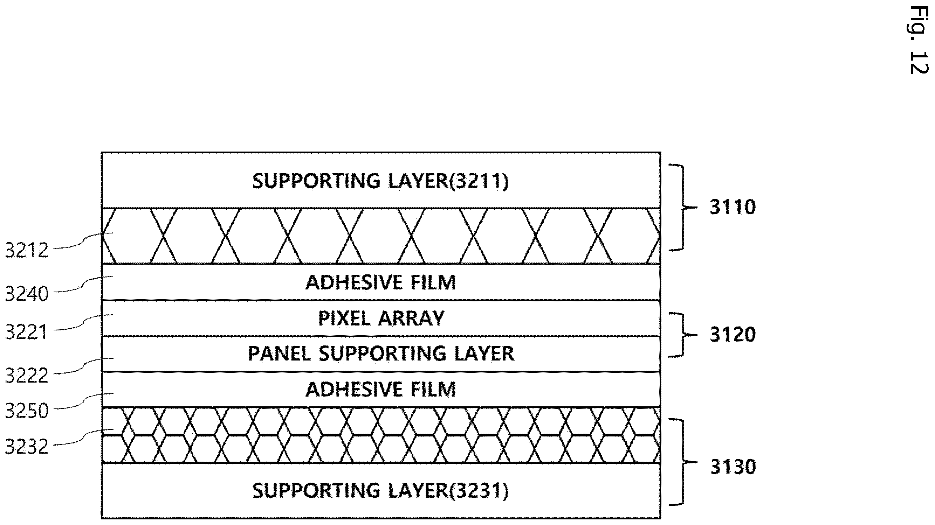

FIG. 12 is a diagram for describing a radiation detection panel of the present disclosure in more detail.

FIG. 12 illustrates the radiation detection panel according to an embodiment of the present disclosure, and the radiation detection panel may use various scintillators and TFTs different from those in FIG. 12.

A front scintillator 3110 may include a supporting layer 3211 and a photoconversion layer 3212. The supporting layer 3211 may be located on the front surface of the photoconversion layer 3212. The supporting layer 3211 may be a component for protecting the surface of the photoconversion layer 3212. In addition, the supporting layer 3211 may be a component for maintaining the shape of the photoconversion layer 3212. The photoconversion layer 3212 may contain gadolinium oxysulfide (Gadox). That is, the front scintillator 3110 may be a Gadox sheet including the supporting layer 3211 and the photoconversion layer 3212.

A TFT panel 3120 may include a pixel array 3221 and a panel supporting layer 3222. The pixel array 3221 may include an amorphous silicon (a-Si) array. The panel supporting layer 3222 may include a polyimide (PI) layer. The panel supporting layer 3222 may include a substrate having high heat resistance, such as a semiconductor substrate, a quartz substrate, and a glass substrate. In addition, the panel supporting layer 3222 may include a flexible substrate such as a plastic, aramid, or bio-nanofibers.

The TFT panel 3120 may be adhered to the front scintillator 3110 by an adhesive film 3240. In addition, the TFT panel 3120 may be adhered to the rear scintillator 3130 by an adhesive film 3250.

The rear scintillator 3130 may include a supporting layer 3231 and a photoconversion layer 3232. The supporting layer 3231 may be located on a rear surface of the photoconversion layer 3232. The supporting layer 3231 may be a component for protecting a surface of the photoconversion layer 3232. The supporting layer 3231 may be a component for maintaining the shape of the photoconversion layer 3232. The photoconversion layer 3232 may contain Gadox. That is, the rear scintillator 3130 may be a Gadox sheet including the supporting layer 3231 and the photoconversion layer 3232.

The supporting layer 3211 is located on the front surface of the radiation detection panel and the supporting layer 3231 is located on the rear surface of the radiation detection panel, and thus the front surface and rear surface of the radiation detection panel can be protected. In addition, the photoconversion layer 3212 is located on the front surface of the TFT panel 3120 and the photoconversion layer 3232 is located on the rear surface of the TFT panel 3120, and thus the distances between the photoconversion layer 3212 and the TFT panel 3120 and between the photoconversion layer 3232 and the TFT panel 3120 can be minimized. The photoconversion layers 3212 and 3232 may emit visible light based on received radiation. The TFT panel 3120 may receive visible light and generate an electric signal. The radiation detector may acquire a radiation image based on the electric signal.

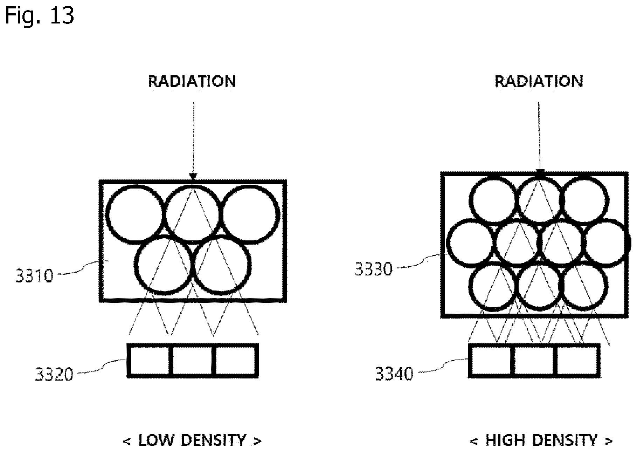

FIG. 13 is a diagram for describing a scintillator according to an embodiment of the present disclosure.

As described above, at least one of the front scintillator and the rear scintillator may be the Gadox sheet. In this case, the density of the Gadox crystal of the front scintillator may be different from the density of the Gadox crystal of the rear scintillator, but is not limited thereto. The density of the Gadox crystal of the front scintillator may be independent of the density of the Gadox crystal of the rear scintillator. That is, the density of the Gadox crystal of the front scintillator may not affect the density of the Gadox crystals of the rear scintillator. The density of the Gadox crystal of the front scintillator may be determined regardless of the density of the Gadox crystal of the rear scintillator. That is, the density of the Gadox crystal of the front scintillator may be the same as or different from the density of the Gadox crystal of the rear scintillator.

For example, the density of Gadox crystal of the front scintillator may be lower than the density of Gadox crystal of the rear scintillator. The density of the Gadox crystal of the front scintillator may be the same as the density of the Gadox crystal of the rear scintillator. The density of the Gadox crystal of the front scintillator may be the same as or lower than the density of the Gadox crystal of the rear scintillator, but is not limited thereto. The density of the Gadox crystal of the front scintillator may be greater than the density of the Gadox crystal of the rear scintillator.

The photoconversion layer 3212 of the front scintillator 3110 and the photoconversion layer 3232 of the rear scintillator 3130 may contain Gadox crystals. The characteristics of the front scintillator 3110 and the rear scintillator 3130 may vary based on the density and thickness of the Gadox crystals of the photoconversion layer 3212 and the photoconversion layer 3232. The crystal density of Gadox may refer to the density of Gadox crystals included in the photoconversion layers 3212 and 3232.

The low density of Gadox crystals means that the number of Gadox crystals per area that react to radiation is small. Therefore, low-density Gadox crystals contained in the scintillator 3310 will generate relatively little visible light. When using low-density Gadox crystals, an image having high sharpness can be obtained. This is because visible light received from one pixel of the TFT panel 3320 is highly likely to be visible light generated from one Gadox crystal. That is, when the radiation detector uses low-density Gadox crystals, the radiation detector can obtain an image with a high modulation transfer function (MTF), low sensitivity, and low noise. Therefore, when the radiation detector uses the low-density Gadox crystals, the radiation detector can acquire a clearer image of the subject compared to when using high-density Gadox crystals.

The high density of Gadox crystals means that the number of Gadox crystals per area that react to radiation is large. Therefore, the high-density Gadox crystals contained in the scintillator 3330 will generate relatively more visible light beams. High-density Gadox crystals generate a large amount of light even with a small amount of radiation, and thus the radiation detector can obtain highly sensitive images. However, when the radiation detector uses the high-density Gadox crystals, the radiation detector can acquire an image having lower sharpness than when using the low-density Gadox crystals. This is because one pixel of the TFT panel 3340 will receive visible light generated from a plurality of Gadox crystals. That is, a radiation detector including high-density Gadox crystals can obtain an image having a low MTF, high sensitivity, and high noise. When the radiation detector uses the high-density Gadox crystals, the radiation detector can acquire an image having higher sensitivity to radiation compared to when the radiation detector uses the low-density Gadox crystals.

Referring again to FIG. 12, the radiation penetrates the front scintillator 3110 having low density and the TFT panel 3120 and then reaches the rear scintillator 3130 having high density. Since the rear scintillator 3130 having relatively high density reacts toward the TFT panel 3120, the closer the portion of the scintillator is to the TFT panel 3120, the more sensitively the radiation detector can obtain an image.

Since the radiation detection panel includes the front scintillator 3110, the TFT panel 3120, and the rear scintillator 3130, the radiation detector can acquire an image by reflecting the characteristics of the photoconversion layers 3212 and 3232 containing Gadox crystals having different densities. Through this, the radiation detector can acquire an improved radiation image by compensating for the disadvantages of the photoconversion layers 3212 and 3232 having different densities.

As described above, at least one of the front scintillator and the rear scintillator is a Gadox sheet, and the thickness of the front scintillator 3110 may be different from the thickness of the rear scintillator 3130, but is not limited thereto. The thickness of the front scintillator 3110 may be independent of the thickness of the rear scintillator 3130. The thickness of the front scintillator 3110 may not affect the thickness of the rear scintillator 3130. The thickness of the front scintillator 3110 may be determined regardless of the thickness of the rear scintillator 3130. That is, the thickness of the front scintillator 3110 may be the same as or different from the thickness of the rear scintillator 3130.

For example, the thickness of the front scintillator 3110 may be smaller than or the same as the thickness of the rear scintillator 3130. Alternatively, the thickness of the front scintillator 3110 may be smaller than the thickness of the rear scintillator 3130. The thickness of the front scintillator 3110 may be the same as the thickness of the rear scintillator 3130, but is not limited thereto. The thickness of the front scintillator 3110 may be greater than the thickness of the rear scintillator 3130.

When the thickness of the photoconversion layer 3212 of the front scintillator 3110 is smaller than the thickness of the photoconversion layer 3232 of the rear scintillator 3130, the image quality and sensitivity can be improved. In addition, when an area of the photoconversion layer 3212 of the front scintillator 3110 is smaller than an area of the photoconversion layer 3232 of the rear scintillator 3130, the image quality and sensitivity can be improved. A radiation detector that uses both the front scintillator 3110 and the rear scintillator 3130 may have further improved spatial resolution and higher dose efficiency than a radiation detector that uses only one of the front and rear scintillators 3110 and 3130. In addition, the sharpness of the image may also be improved due to this. The radiation detection panel includes the front scintillator 3110, the TFT panel 3120, and the rear scintillator 3130, and thus the radiation detector can acquire an image by reflecting the characteristics of the photoconversion layers 3212 and 3232 having different thicknesses and areas. The radiation detector can acquire an improved radiation image by compensating for the shortcomings of the photoconversion layers 3212 and 3232 having different thicknesses and areas.

As described above, at least one of the front scintillator and the rear scintillator may be the Gadox sheet. In addition, the front scintillator may have a material with which an image having a higher MTF, lower sensitivity, and lower noise than that of the rear scintillator can be acquired. As described above, by controlling at least one of the density, thickness, and area of the front scintillator and the rear scintillator, it is possible to ensure that the front scintillator acquires an image having a higher MTF, lower sensitivity, and lower noise than that of the rear scintillator. However, the present invention is not limited thereto, and various methods can be used to ensure that the front scintillator acquires the image having a higher MTF, lower sensitivity, and lower noise than that of the rear scintillator.

In the above description, the case where both the front scintillator and the rear scintillator include the Gadox sheet has been described. The Gadox sheet is a photoconversion layer having high sensitivity to high-energy radiation, and thus the sensitivity when both the front scintillator and the rear scintillator include the Gadox sheet may be higher than that when there is only one scintillator. Therefore, the radiation detector can acquire a clear image.

However, the present invention is not limited thereto. One of the front scintillator and the rear scintillator may be a Gadox sheet, and the other may be either cesium iodide (CsI) or perovskite. In this way, even if only one of the front scintillator and the rear scintillator is the Gadox sheet, the radiation detector may have both the advantages of the Gadox sheet and advantages of materials other than the Gadox sheet.

The radiation detector of the present disclosure may be a bendable detector including a flexible TFT. In addition, as described above, the radiation detector may include the front scintillator and the rear scintillator including the Gadox sheet. When the front scintillator and the rear scintillator include the Gadox sheet, there are advantages in the following aspects compared to using a scintillator made of other materials. High energy industrial radiation sources may produce high afterimages in CsI. Therefore, a radiation detector including a scintillator made of CsI acquires an image with afterimages (noise), and thus images that are not clear may be acquired. Conversely, the radiation detector including the front scintillator and the rear scintillator that include the Gadox sheet can obtain a clear image.

In addition, a columnar structure of the scintillator containing CsI may be destroyed when repeatedly bent. When the columnar structure is destroyed, the efficiency of converting radiation into visible light may decrease, which may degrade the image quality. However, the radiation detector including the front scintillator and the rear scintillator that include the Gadox sheet can always acquire a clear image even when the radiation detector is bent several times.

Therefore, in a radiation detector in which a scintillator containing CsI and a scintillator including a Gadox sheet are used together, the rear scintillator may contain CsI, and the front scintillator may include the Gadox sheet. This is because the curvature of the rear scintillator will be relatively smaller. In addition, since the radiation reaches the rear scintillator after being transmitted through the front scintillator and the TFT panel, no significant afterimage will remain, but it is not limited to thereto.

Although the Gadox sheet may have lower sensitivity than the CsI material, sensitivity of the radiation detector of the present disclosure can be increased by doubly arranging the Gadox sheet on the front surface and rear surface thereof. Therefore, according to the radiation detector of the present disclosure, the same effect as when using a high-sensitivity light conversion layer may be achieved.

In addition, in the case of high-energy X-rays and gamma-rays used in industrial radiation detectors, the dose absorbed by the scintillator may be small. This is the cause of lengthening the photographing time. However, since the radiation detector of the present disclosure uses a dual photoconversion layer structure, it has high sensitivity and can reduce the photographing time. This has the effect of reducing the exposure of the subject or user.

In addition, in order to increase only the sensitivity in the dual photoconversion layer, high-density or thick Gadox sheets may be used on the front surface and rear surface in a double manner. However, in this case, the sharpness of the image can be reduced. Therefore, in order to increase the sharpness of the image, when low-density or thin Gadox sheets are used in a double manner, the sensitivity may be increased while maintaining the sharpness. That is, when the thickness or density of Gadox is applied and used to suit the use of the radiation detector without distinction between the front and rear of the radiation detection panel, the efficiency may be increased. For example, the front scintillator and the rear scintillator may have the same thin thickness or the same density of Gadox crystals, but is not limited to this.

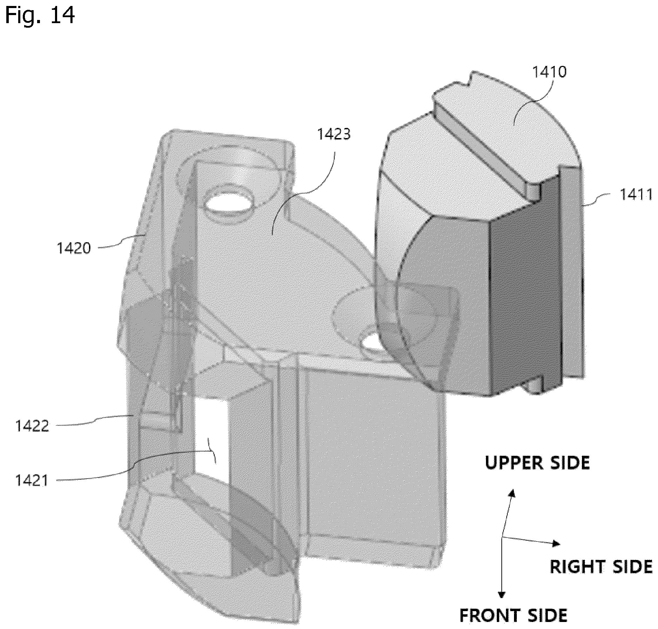

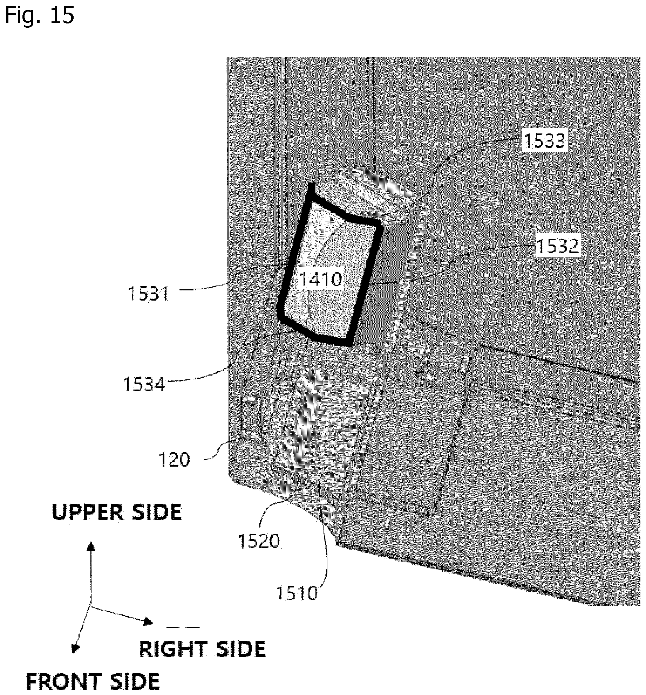

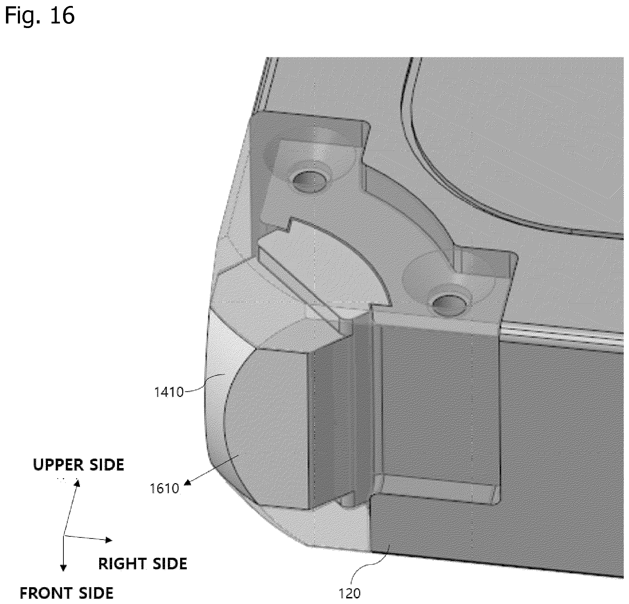

FIG. 14 is a diagram for describing a radiation detector according to an embodiment of the present disclosure. FIG. 15 is a diagram for describing a radiation detector according to an embodiment of the present disclosure. FIG. 16 is a diagram for describing a radiation detector according to an embodiment of the present disclosure.

Referring to FIG. 14, the radiation detector may further include a corner protector 1410 and a corner bracket 1420. The corner protector 1410 and the corner bracket 1420 may be located at a corner of a housing 120. The corner protector 1410 and the corner bracket 1420 may be located at at least one of four corners of the housing 120. The corner protector 1410 and the corner bracket 1420 may be located at one or more of an upper left corner, a lower left corner, a lower right corner, or an upper right corner of the housing 120, but are not limited thereto. The corner protector 1410 and the corner bracket 1420 may be located on a side surface of the housing 120. The corner protector 1410 and the corner bracket 1420 may be located at one or more of four side surfaces of the housing 120. The corner protector 1410 and the corner bracket 1420 may be located at one or more of a left side surface, a right side surface, an upper side surface, or a lower side surface of the housing 120. With reference to FIGS. 14 to 16, the description will be focused on one corner protector 1410 and one corner bracket 1420 among the corner protectors and corner brackets that may be located at the corners and side surfaces.

The corner protector 1410 may be joined to the housing and protect a corner or side surface of the housing. The corner protector 1410 may be joined to the corner or side surface of the housing to protect the corner or side surface of the housing. The corner protector 1410 may be joined to the corner or side surface of the housing to protect at least one of the upper left corner, lower left corner, lower right corner, upper right corner, left side surface, right side surface, upper side surface, and lower side surface thereof. The corner bracket 1420 may allow at least a portion of the corner protector 1410 to be inserted into and joined to the corner bracket 1420, and to fix the corner protector 1410 to the housing. FIGS. 14 to 16 illustrate a structure in which the corner protector 1410 and the corner bracket 1420 are joined to the corner of the housing 120 according to the embodiment of the present disclosure. The description on the illustrated structure may also be applied to a structure in which the corner protector 1410 and the corner bracket 1420 are joined to the side surface of the housing 120.

The corner protector 1410 and the corner bracket 1420 may be integrally formed. The corner protector 1410 and the corner bracket 1420 may also be formed by double injection but are not limited thereto. The corner protector 1410 and the corner bracket 1420 may be individually formed and assembled.

The material of the corner protector 1410 may include at least one of urethane, rubber, plastic, and silicone. In addition, the material of the corner bracket 1420 may include at least one of urethane, metal, and plastic. The corner bracket 1420 may also contain at least one of aluminum and stainless steel. The corner bracket 1420 may be made of any one of rubber, plastic, metal, and carbon. The corner bracket 1420 may have a different strength from the corner protector 1410 but is not limited thereto. However, it is not limited thereto, and the corner bracket 1420 may have the same strength as the corner protector 1410. The strength or hardness of the corner bracket 1420 may be greater than or equal to the strength or hardness of the corner protector 1410.

The corner bracket 1420 may have a protector insertion hole 1421 for inserting the corner protector 1410 formed thereon. The protector insertion hole 1421 may be surrounded by a protector cover 1422. That is, the protector cover 1422 may have the protector insertion hole 1421 into which the corner protector 1410 is inserted formed thereon. The corner bracket 1420 may include a joining plate 1423. The protector cover 1422 may be vertically coupled to the joining plate 1423. The joining plate 1423 may be parallel to a rear surface 123 of the housing or a front surface 121 of the housing.

Spaces 1531, 1532, 1533, and 1534 may be formed between the corner protector 1410 and the corner bracket 1420. When the corner protector 1410 is inserted into the corner bracket 1420, the spaces 1531, 1532, 1533, and 1534 may be formed between the corner protector 1410 and the corner bracket 1420. When the corner protector 1410 is inserted into the corner bracket 1420, there may be spaces 1531, 1532, 1533, and 1534 between a perimeter of the corner protector 1410 and an inner peripheral surface of the corner bracket 1420. An area formed by the protector insertion hole 1421 may be larger than the area of a cross-section of the corner protector 1410. In this way, since the spaces 1531, 1532, 1533, and 1534 are between the corner protector 1410 and the corner bracket 1420, even when a large force is applied to the corner protector 1410 when the radiation detector is dropped, the contact of the corner protector 1410 with the corner bracket 1420 can be minimized. That is, since the corner protector 1410 hardly transmits force to the corner bracket 1420, deformation of the corner bracket 1420, the housing 120, or the detection panel 110 can be minimized. Therefore, the durability of the radiation detector can be greatly improved.

A width of the front space 1534 and the rear space 1533 among the spaces between the corner protector 1410 and the corner bracket 1420 may be greater than or equal to a width of the first side space 1531 and the second side space 1532. For example, the width of the front space 1534 and the rear space 1533 may be 0.65 mm or more and 0.75 mm or less, and the width of the first side space 1531 and the second side space 1532 may be 0.60 mm or more and 0.70 mm or less. When the corner protector 1410 passes through the corner bracket 1420, the shape of the corner protector 1410 may be a long shape in the front and rear directions. Therefore, the corner protector 1410 can withstand the force applied forward or rearward more easily than the force applied leftward and rightward or upward and downward. The corner protector 1410 may be deformed less by a force applied forward or rearward. In addition, since the width of the front space 1534 and the rear space 1533 is large, there may be almost no cases where the corner protector 1410 is deformed by the force applied forward or rearward and comes into contact with the corner bracket 1420. That is, the corner protector 1410 may transmit less force to the corner bracket 1420. Therefore, the deformation of the corner bracket 1420, the housing 120, or the detection panel 110 can be minimized. Therefore, the durability of the radiation detector can be greatly improved.

The corner protector 1410 may be joined to a groove 1510 formed in the housing 120 by sliding forward or rearward. The corner protector 1410 may include a joining protrusion 1411. The joining protrusion may extend forward and rearward. The joining protrusion 1411 of the corner protector 1410 may slide along the groove 1510 formed in the housing 120 so that the corner protector 1410 may be joined to the housing 120. By this joining method of the corner protector 1410 and the housing 120, the corner protector 1410 can be prevented from being separated in a diagonal direction 1610. In FIG. 16, the diagonal direction may be a combined direction of downward and leftward directions. The corner protector 1410 may be joined to the housing 120 by sliding in a forward direction with respect to the housing. The housing 120 may have a movement limiter 1520 for limiting the movement of the corner protector 1410 formed thereon. The corner protector 1410 may slide forward and stop at a predetermined position by the movement limiter 1520. However, the present invention is not limited thereto, and the corner protector 1410 may be joined to the housing 120 by sliding in a rearward direction with respect to the housing.

In addition, the present invention is not limited thereto, and at least one of the corner protector 1410 and the corner bracket 1420 may be adhered to the housing 120. A separate adhesive may be used for the adhesion. However, the present invention is not limited thereto, and at least one of the housing 120, the corner protector 1410, and the corner bracket 1420 may be adhered by heat without a separate adhesive.

The corner bracket 1420 may be fixed to the housing 120 to prevent the corner protector 1410 from being separated from the housing 120. The corner bracket 1420 may be join to the housing 120 by a screw. For example, a screw may be joined to the rear surface 123 of the housing 120 through a screw hole formed in the joining plate 1423 of the corner bracket 1420, but is not limited thereto. The screw may be joined to the front surface 121 of the housing 120 through the screw hole formed in the joining plate 1423 of the corner bracket 1420. However, the present invention is not limited thereto, and the corner bracket 1420 may be joined to the housing 120 with an adhesive or physically joined thereto by a groove and a protrusion.

When the corner protector 1410 is joined to the housing 120 by sliding in the forward direction with respect to the housing, the joining plate 1423 may be joined to the rear surface 123 of the housing to prevent the corner protector 1410 from being separated rearward. When the corner protector 1410 is joined to the housing 120 by sliding in the rearward direction with respect to the housing, the joining plate 1423 may be joined to the front surface 121 of the housing to prevent the corner protector 1410 from being separated rearward. The corner protector 1410 can be prevented from moving back and forth by the movement limiter 1520 and the joining plate 1423.

The detection panel of the radiation detector of the present disclosure can be prevented from being damaged by external force. Accordingly, the durability of the radiation detector is improved, and the radiation detector can always generate high-quality images. In addition, since the degree of durability of the radiation detector is high, even an object that is heavy can be photographed without a problem.

However, the effect of the radiation detector of the present disclosure is not limited to the above effects.

The description has focused on various embodiments. Those of ordinary skill in the art to which the present invention pertains will understand that the present invention may be implemented in a modified form without departing from the essential characteristics of the present invention. Therefore, the disclosed embodiments should be considered from a descriptive perspective rather than a restrictive perspective. The scope of the present invention is set forth in the claims rather than the above description, and all differences within the scope equivalent to the claims should be construed as being included in the present invention.

Meanwhile, the embodiments of the present invention described above can be written as a program that can be executed on a computer and can be implemented in a general-purpose digital computer that executes the program using a computer-readable recording medium. The computer-readable recording medium includes a storage medium such as a magnetic storage medium (e.g., a ROM, floppy disk, hard disk, etc.), an optical readable medium (e.g., a compact disc ROM (CD-ROM), digital versatile disc (DVD), etc.).

## Claims

1. A radiation detector that detects radiation, comprising:
a housing;
a detection panel that is included inside the housing and detects radiation;
a middle plate that is included inside the housing, is in contact with the detection panel, and supports the detection panel; and
a supporting member coupled to the middle plate and supporting the middle plate.

2. The radiation detector of claim 1, wherein the supporting member is coupled to a region for the supporting member included in at least a portion of a region of the middle plate.

3. The radiation detector of claim 1 or 2, wherein a cross section of the supporting member has a portion of a trapezoidal shape or a portion of an inverted trapezoidal shape.

4. The radiation detector of claim 1 or 2, wherein a cross section of the supporting member has one shape among a portion of a polygonal shape, a portion of an elliptical shape, and a portion of a circular shape.

5. The radiation detector of any one of claims 1 to 4, further comprising a filler having elasticity in a recess formed by the supporting member.

6. The radiation detector of any one of claims 1 to 5, wherein a material of the supporting member includes at least one of a metal, a plastic, carbon, and a composite material.

7. The radiation detector of any one of claims 1 to 6, wherein the supporting member is coupled to the middle plate by an adhesive layer formed on one end surface of the middle plate.

8. The radiation detector of any one of claims 1 to 6, wherein the supporting member is coupled to the middle plate by at least one fastening screw.

9. The radiation detector of any one of claims 1 to 8, wherein the supporting member includes a plurality of supporting members.

10. The radiation detector of any one of claims 1 to 9, wherein at least a portion of the supporting member includes:
a first coupling surface coupled to a rear surface of the housing and parallel to the rear surface;
a first inclined surface coupled to the first coupling surface and having a predetermined inclination angle with respect to the rear surface;
a second coupling surface coupled to the first inclined surface, coupled to the middle plate, and parallel to the middle plate;
a second inclined surface that is coupled to the second coupling surface, has a predetermined inclination angle with respect to the rear surface, and is not parallel to the first inclined surface; and
a third coupling surface coupled to the second inclined surface, coupled to the rear surface of the housing, and parallel to the rear surface,
wherein the radiation detector further comprises a filler in a first space formed by the rear surface, the first inclined surface, the second coupling surface, and the second inclined surface, and .
a filler in at least one of a second space and a third space,
wherein the second space is formed by the middle plate, the first coupling surface, the rear surface, and the first inclined surface, and
the third space is formed by the middle plate, the second inclined surface, the rear surface, and the third coupling surface.

11. The radiation detector of any one of claims 1 to 10, wherein at least a portion of the supporting member includes:
a fourth coupling surface coupled to the middle plate and parallel to the middle plate;
a third inclined surface coupled to the fourth coupling surface and having a predetermined inclination angle with respect to the middle plate;
a fifth coupling surface coupled to the third inclination surface, coupled to the rear surface of the housing, and parallel to the rear surface;
a fourth inclined surface that is coupled to the fifth coupling surface, has a predetermined inclination angle with respect to the middle plate, and is not parallel to the third inclined surface; and
a sixth coupling surface coupled to the fourth inclination angle, coupled to the middle plate, and parallel to the middle plate,wherein the radiation detector further comprises a filler in a fourth space formed by the middle plate, the third inclined surface, the fifth coupling surface, and the fourth inclined surface, and
a filler in at least one of a fifth space and a sixth space,
wherein the fifth space is formed by the middle plate, the fourth coupling surface, the rear surface, and the third inclined surface, and
the sixth space is formed by the middle plate, the fourth inclined surface, the rear surface, and the sixth coupling surface.

12. The radiation detector of any one of claims 1 to 11, wherein an elastic layer is interposed between the detection panel and a front surface of the housing.

13. The radiation detector of any one of claims 1 to 12, wherein the supporting member is coupled to a rear surface of the housing by one or more of at least one fastening screw and an adhesive layer.

14. The radiation detector of any one of claims 1 to 13, further comprising a battery in a region in which the supporting member is not formed within a region of the middle plate.

15. The radiation detector of any one of claims 1 to 14, further comprising:
a corner protector joined to the housing to protect a corner or side surface of the housing; and
a corner bracket to which at least a portion of the corner protector is joined by being inserted thereinto and which is for fixing the corner protector to the housing,
wherein the corner bracket is fixed to the housing to prevent the corner protector from being separated from the housing,
wherein the corner protector is joined to a groove formed in the housing by sliding forward or rearward,
wherein the corner bracket has a different strength from the corner protector, and the corner bracket is made of any one of rubber, plastic, metal, and carbon,
wherein a space is formed between the corner protector and the corner bracket.
